# EUROPÄISCHE PATENTSCHRIFT

(11) **EP 4 359 286 B1**
(45) Veröffentlichungstag und Bekanntmachung des Hinweises auf die Patenterteilung: **12.11.2025**
(21) Anmeldenummer: 22727270.5
(22) Anmeldetag: 02.05.2022
(51) Int. Cl.: B62D 25/08, B62D 25/20, B62D 65/02

(54) **VERFAHREN ZUM ZUSAMMENBAU EINER KRAFTFAHRZEUGKAROSSERIE**
METHOD FOR ASSEMBLING A MOTOR VEHICLE BODY
PROCÉDÉ D'ASSEMBLAGE D'UNE CARROSSERIE DE VÉHICULE AUTOMOBILE

(30) Priorität: 22.06.2021 DE 102021206369
(43) Veröffentlichungstag der Anmeldung: 01.05.2024
(73) Patentinhaber: VOLKSWAGEN AKTIENGESELLSCHAFT, 38440 Wolfsburg (DE)
(72) Erfinder: SCHWERING, Christian, 49744 Groß Hesepe (DE); PAULSEN, Thomas, 38448 Wolfsburg (DE); KRAUTH, Werner, 38442 Wolfsburg (DE)
(86) Internationale Anmeldenummer: PCT/EP2022/061671
(87) Internationale Veröffentlichungsnummer: WO 2022/268386

(56) Entgegenhaltungen:
- EP-A2- 1 440 870
- DE-A1- 102008 055 738
- DE-A1- 102012 023 674
- DE-T2- 69 203 928
- DE-U1- 202012 103 583
- FR-A1- 3 014 401

## Beschreibung

Die Erfindung betrifft ein Verfahren zum Zusammenbau einer Kraftfahrzeugkarosserie nach dem Oberbegriff des Anspruchs 1.

Kraftfahrzeugkarosserien in der in Rede stehenden Art weisen eine Vorderwagenstruktur mit einer Stirnwand und einen in Kraftfahrzeuglängsrichtung hinter der Stirnwand angeordneten Karosseriebereich auf.

Bei der Stirnwand der Kraftfahrzeugkarosserie handelt es sich um ein flächiges Gebilde, das eine Trennung zwischen der Fahrgastzelle und der Vorderwagenstruktur des Kraftfahrzeugs bildet. Historisch werden derartige Stirnwände auch als "Firewall" bzw. "Feuerwände" bezeichnet, da sie in früheren Kraftfahrzeugen insbesondere dazu dienten, die Passagiere vor einem Feuer im Motorraum zu schützen.

Darüber hinaus können derartige Feuerwände auch dazu dienen, im Falle eines Frontalaufpralls des Kraftfahrzeugs auf ein Hindernis Kräfte aufzunehmen und in die umliegenden Strukturen der Kraftfahrzeugkarosserie weiterzuleiten. Damit können die Feuerwände zum Schutz der Insassen von mechanischen Einwirkungen bei Unfällen beitragen.

Bei dem hinter der Stirnwand angeordneten Karosseriebereich handelt es sich bei modernen Kraftfahrzeugen insbesondere um die Fahrgastzelle. Diese bildet bei modernen Kraftfahrzeugen den größten Teil der Kraftfahrzeugkarosserie. Typischerweise geht die Fahrgastzelle in Fahrtrichtung strukturell in zwei Längsträger über, die sich längs in dem vor der Kraftfahrzeugkarosserie angeordneten Vorderwagen erstrecken. Die Stirnwand besteht dabei häufig aus einer Mehrzahl Elemente, die um die Längsträger an der Grenze zwischen der Vorderwagenstruktur und dem in Kraftfahrzeuglängsrichtung hinter der Stirnwand angeordneten Karosseriebereich angeordnet und typischerweise verschweißt werden. Strukturell betrachtet bildet, insbesondere im Hinblick auf die Übertragung von Kräften, der hinter der Stirnwand angeordnete Karosseriebereich mit den Längsträgern, die sich durch den Vorderwagen erstrecken, eine Einheit.

Dies ist zwar in mechanischer Hinsicht, insbesondere auch im Hinblick auf die Lastpfade im Falle eines Frontalaufpralls, sinnvoll, für den Zusammenbau der Kraftfahrzeugkarosserie bedeutet dies jedoch, dass der Aufbau des Vorderwagens erfolgt, während der Vorderwagen mit dem hinter der Stirnwand angeordneten Karosseriebereich verbunden ist. Entsprechend aufwändig gestaltet sich der Zusammenbau, es muss insbesondere die gesamte - oder zumindest fast die gesamte - Kraftfahrzeugkarosserie gehandhabt werden, während Arbeiten am Vorderwagen erfolgen.

Aus dem Stand der Technik sind daher bereits Ansätze bekannt, um den Zusammenbau der Vorderwagenstruktur zu vereinfachen. So ist beispielsweise aus der DE 10 2011 119 561 A1 ein Tragstrukturbauteil bekannt, welches zumindest eine Federbeinaufnahme und einen Stirnwandabschnitt aufweist. Das Tragstrukturbauteil ist als Gussteil ausgebildet. Durch ein derartiges Tragstrukturbauteil lässt sich ein Teil der Vorderwagenstruktur, der bereits in sich eine vergleichsweise hohe Komplexität aufweist, einstückig vorfertigen und dann in einem Stück mit der Vorderwagenstruktur verbinden. Die Fertigungsschritte, die an der Vorderwagenstruktur als Bestandteil der Gesamtkarosserie vorgenommen werden müssen, werden hierdurch zwar reduziert, dennoch muss der Einbau des Tragstrukturbauteils in die Vorderwagenstruktur erfolgen, während die Vorderwagenstruktur bereits ein Bestandteil der übrigen Kraftfahrzeugkarosserie ist.

Die DE 10 2004 035 530 B4 offenbart ebenfalls ein Verfahren, bei dem ein Teil der Vorderwagenstruktur an der Kraftfahrzeugkarosserie befestigt wird. Der vormontierte Teilbereich des Vorderwagens ist bei dieser Lösung zwar größer als im Fall des vorstehend zitierten Standes der Technik, jedoch sind immer noch weite Bereiche der Vorderwagenstruktur Bestandteil der vormontierten Vorderwagenstruktur. Hierzu gehört insbesondere auch die Stirnwand, die weiterhin auf konventionelle Weise an den hinter der Stirnwand liegenden Karosseriebereich angefügt und hierbei aus einer Vielzahl Einzelteilen kleinteilig wird, bevor der vorgefertigte Teil der Vorderwagenstruktur mit der übrigen Kraftfahrzeugkarosserie verbunden wird.

Die DE 692 03 928 T2 zeigt ein Fahrzeugmontageverfahren bei der eine untere Karosserie, die einen Boden und einen vorderen Karosserieabschnitt umfasst, sowie eine obere Karosserie, die Dach und Seiten der Karosserie umfasst, zusammengebaut und miteinander verbunden werden.

Die DE 10 2008 055 738 A1 betrifft ein Modulsystem zum Aufbau einer Kraftwagenkarosserie, bei der Hauptbodenmodule mit Vorderwagenmodulen und Heckwagenmodulen kombinierbar sind.

Die FR 3 014 401 A1 zeigt ein Kraftfahrzeug mit einer Karosserie, die einen Passagierbereich und einen Motorenbereich aufweist. Die Karosserie ist aus einem Kompositmaterial aus einer Matrix und einer Verstärkung gebildet.

Die DE 10 2012 023 674 A1 zeigt ein Kraftfahrzeug mit einer Stirnwand, bei der seitliche Stirnwände an einer zentralen Stirnwand befestigt sind.

Die DE 20 2012 103 583 U1 zeigt eine Verbindungsanordnung zwischen einer Fahrgastzelle und einem Längsträger, bei welcher der Längsträger mittels eines Verbindungselements mit der Fahrgastzelle verbunden ist.

Die EP 1 440 870 A2 zeigt ein Verfahren gemäß dem Oberbegriff des Anspruchs 1.

Der Erfindung liegt daher die Aufgabe zugrunde, ein Verfahren zum Zusammenbau einer Kraftfahrzeugkarosserie aufzuzeigen, das die Herstellung der Kraftfahrzeugkarosserie im Bereich des Vorderwagens vereinfacht.

Die Aufgabe wird gelöst durch ein Verfahren zum Zusammenbau einer Kraftfahrzeugkarosserie mit den Merkmalen des Anspruchs 1. Die Merkmale der abhängigen Ansprüche betreffen vorteilhafte Ausführungsformen.

Das Verfahren sieht vor, dass die Vorderwagenstruktur zunächst getrennt von dem Karosseriebereich vormontiert wird, bevor die Vorderwagenstruktur mit dem hinter der Stirnwand angeordneten Karosseriebereich verbunden wird. Dabei verläuft die Trennung zwischen der vormontierten Vorderwagenstruktur und dem Karosseriebereich unmittelbar vor oder hinter der Stirnwand.

Mit anderen Worten wird die Trennung zwischen der vorzufertigenden Vorderwagenstruktur und der übrigen Kraftfahrzeugkarosserie hinter die Stirnwand verlegt. Auf diese Weise wird es möglich, die Vormontage der Vorderwagenstruktur bis zu und/oder einschließlich der Stirnwand unabhängig von der übrigen Kraftfahrzeugkarosserie vorzunehmen. Zudem ermöglicht die Trennung unmittelbar vor oder hinter der Stirnwand die Verwendung großflächiger Bauteile zur Herstellung der Stirnwand, im günstigsten Fall kann die gesamte Stirnwand auf diese Weise einstückig ausgeführt werden.

Dabei kann das Verfahren vorsehen, dass die Stirnwand mit der vormontierten Vorderwagenstruktur verbunden wird, bevor die Vorderwagenstruktur mit dem hinter der Stirnwand angeordneten Karosseriebereich verbunden wird. Die Stirnwand wird so zum Bestandteil der vormontierten Vorderwagenstruktur und bildet insbesondere deren in Fahrzeuglängsrichtung rückwärtigen Abschluss.

Alternativ kann das Verfahren vorsehen, dass die Stirnwand mit dem hinter der Stirnwand angeordneten Karosseriebereich verbunden wird, bevor die Vorderwagenstruktur mit dem hinter der Stirnwand angeordneten Karosseriebereich verbunden wird. Die Stirnwand bildet in diesem Fall bis zum Zeitpunkt des Verbindens der vormontierten Vorderwagenstruktur mit der Karosserie insbesondere den in Fahrzeuglängsrichtung weisenden Abschluss der Kraftfahrzeugkarosserie.

Das Verfahren sieht vor, dass bei der Vormontage der Vorderwagenstruktur Längsträger der Vorderwagenstruktur mit der Stirnwand verbunden werden. Auf diese Weise wird es ermöglicht, dass mechanische Kräfte, die auf die Längsträger einwirken, über die Stirnwand an den hinter der Stirnwand angeordneten Karosseriebereich weitergeleitet werden. Dies ist insbesondere im Zusammenhang mit Rändern der Stirnwand, die sich zumindest im Wesentlichen in Fahrzeugquerrichtung erstrecken und vor Karosseriestrukturen, insbesondere vor Bestandteilen der A-Säulen der Kraftfahrzeugkarosserie, angeordnet sind, vorteilhaft. Kräfte, die in die Stirnwand eingeleitet werden, können so über die Randbereiche vorteilhaft in die hinter der Stirnwand angeordnete Karosserie eingeleitet werden. Die Stirnwand kann so eine "schutzschildartige" Funktion im Falle eines Frontalaufpralls übernehmen.

Die Verbindung der Längsträger mit der Stirnwand kann insbesondere mittels Verbindungselementen erfolgen. Die Verbindungselemente können hierbei sowohl mit den Längsträgern als auch mit der Stirnwand verbunden werden.

Die Verwendung derartiger Verbindungselemente ermöglicht es insbesondere, dass unterschiedliche Werkstoffkombinationen verwendet werden. Beispielsweise können die Längsträger als Großgussbauteile, insbesondere aus Aluminiumdruckguss, ausgeführt sein, ebenfalls können Stahl- oder Aluminiumbleche oder auch nicht-metallische Werkstoffe oder ein Mischbaukonzept zum Einsatz kommen. Die Stirnwand und die Verbindungselemente sind dabei insbesondere aus Stahl. Der Stahl kann insbesondere zur Steigerung seiner Festigkeit wärmebehandelt sein. Derartige Stähle zeichnen sich durch eine hohe Festigkeit und dabei gleichzeitig noch gute Duktilität aus. Darüber hinaus lassen sich die Verbindungselemente mit der Stirnwand in vorteilhafter Weise durch eine Schweißverbindung verbinden, wenn beide Bauteile aus Stahl sind. Vorzugsweise werden hierbei zunächst die Längsträger mit den Verbindungselementen verbunden, bevor diese mit der Stirnwand verbunden werden. Auf diese Weise lässt sich die Verbindung der Längsträger mit der Stirnwand insbesondere dann in vorteilhafter Weise herstellen, wenn die Längsträger aus einem von dem Material der Verbindungselemente und der Stirnwand verschiedenen Material sind, so dass hier beispielsweise beim Verbinden der Längsträger mit den Verbindungselementen zunächst ein Klebeverfahren zum Einsatz kommen kann, bevor die Verbindungselemente mit der Stirnwand verschweißt werden. Insbesondere dann, wenn sowohl Längsträger als auch die Stirnwand aus Stahl sind, kann eine direkte Verbindung der Längsträger mit der Stirnwand, insbesondere durch Schweißen, erfolgen.

Die Verbindungselemente können insbesondere derart gestaltet sein, dass sie mit einem ihrer Teilbereiche flächig an der Stirnwand anliegen. Hierdurch lassen sich die Schweißverbindungen vorteilhaft, beispielsweise durch Schweißpunkte, realisieren. Weiterhin können die Verbindungselemente vorteilhafterweise derart gestaltet werden, dass sie einen Teilbereich der Längsträger manschettenartig umschließen. Hierbei können die Verbindungselemente den gesamten und/oder einen Teil des Umfangs der Längsträger umschließen. Die Verbindungselemente können ebenfalls flächig an den Längsträgern anliegen. Dies ist beispielsweise für das Ausbilden einer stoffschlüssigen Verbindung zwischen Längsträger und Verbindungselement, wie beispielsweise einer Klebeverbindung, von Vorteil. Alternativ und/oder ergänzend können auch andere Fügetechniken, insbesondere aus dem Bereich des Mischbaus, zum Einsatz kommen, wie beispielsweise Schraubverbindungen, insbesondere mittels Fließlochschrauben, Nietverbindungen, insbesondere mittels Halbhohlstanznieten und/oder Vollstanznieten, und/oder andere stoffschlüssige Verfahren, insbesondere Reibschweißen und/oder Widerstandsschweißen.

Das Verfahren sieht vor, dass bei der Vormontage Strukturelemente zum Verbinden der Längsträger mit dem hinter der Stirnwand angeordneten Karosseriebereich mit den Längsträgern verbunden werden. Derartige Strukturelemente werden hierfür durch Öffnungen in der Stirnwand geführt. Die Strukturelemente sind in der Lage, eine mechanische Verbindung zwischen den Längsträgern und dem hinter der Stirnwand angeordneten Karosseriebereich zu schaffen und dadurch mechanische Kräfte von den Längsträgern zu dem hinter der Stirnwand angeordneten Karosseriebereich zu übertragen.

Das Verfahren kann insbesondere vorsehen, dass die Längsträger als Hohlstruktur ausgeführt sind und die Strukturelemente mit der Innenseite der Hohlstruktur verbunden werden. In diesem Fall kann insbesondere ein Teil des jeweiligen Längsträgers erst nach dem Verbinden des entsprechenden Strukturelements mit der Innenseite des Längsträgers an den Längsträger angefügt werden. Hierdurch bleibt der "Innenraum" des Längsträgers zugänglich, um das Strukturelement mit der Innenseite der Hohlstruktur zu verbinden.

Die Strukturelemente können zunächst mit der Stirnwand verbunden werden, bevor die Verbindung der Längsträger mit der Stirnwand und/oder der Strukturelemente mit den Längsträgern erfolgt. Hierdurch kann eine Einheit aus Stirnwand und Strukturelementen geschaffen werden, die sich in vorteilhafter Weise mit den Längsträgern verbinden lässt. Das Verbinden der Einheit aus Strukturelementen und Stirnwand mit den Längsträgern kann dabei insbesondere mittels der vorstehend beschriebenen Verbindungselemente erfolgen, die vorzugsweise bereits mit den Längsträgern verbunden sind.

Es ist vorteilhaft, wenn die Strukturelemente durch Öffnungen der Stirnwand geführt werden, insbesondere bevor sie mit der Stirnwand und/oder den Längsträgern verbunden werden. Das Führen der Strukturelemente durch die Öffnungen ermöglicht einen die Stirnwand überbrückenden Lastpfad, mittels dessen Kräfte von den Längsträgern über die Strukturelemente in den hinter der Stirnwand angeordneten Karosseriebereich eingeleitet werden können.

Das Verfahren kann vorsehen, dass Strukturbauteile mit den Längsträgern verbunden werden. Die Strukturbauteile umfassen zunächst einen Teil eines Federbeindoms, eines oberen Längsträgers und/oder eines Radhauses. Die Strukturbauteile können insbesondere mit den Längsträgern verbunden werden, bevor die Längsträger mit den Strukturelementen und/oder der Stirnwand verbunden werden. Hierdurch wird eine Einheit aus den Längsträgern und den Strukturbauteilen gebildet, die sich wiederum in vorteilhafter Weise als Ganzes handhaben und mit der Stirnwand und/oder den Strukturelementen, insbesondere einer aus den Strukturelementen und der Stirnwand gebildeten Einheit, verbinden lässt.

Das Verfahren kann vorsehen, dass vor dem Verbinden der Vorderwagenstruktur mit dem hinter der Stirnwand angeordneten Karosseriebereich ein Windlaufquerträger mit der Stirnwand und/oder den Strukturbauteilen verbunden wird. Ein derartiger Windlaufquerträger kann so ebenfalls Bestandteil der vormontierten Vorderwagenstruktur werden.

Bei dem Verbinden von Windlaufquerträger und/oder Strukturbauteilen mit der Stirnwand können, wie vorstehend zu den Längsträgern beschrieben, ebenfalls Verbindungselemente zum Verbinden der jeweiligen Bauteile mit der Stirnwand zum Einsatz kommen. Diese Verbindungselemente und deren Verarbeitung im Rahmen des Verfahrens können die gleichen Merkmale wie die vorstehend im Zusammenhang mit der Verbindung der Längsträger mit der Stirnwand beschriebenen Verbindungselemente aufweisen.

Das Verfahren kann vorsehen, dass ein Bauteil, welches zumindest den Teil der Stirnwand bildet, der mit den Längsträgern verbunden wird, mittels eines Umformverfahrens aus einem flächigen Halbzeug hergestellt wird. Hierdurch wird ein vergleichsweise großflächiger Bereich der Stirnwand, insbesondere die gesamte Stirnwand, als einstückiges Bauteil durch ein Umformverfahren bereitgestellt. Es hat sich gezeigt, dass ein derartiges Bauteil als Bestandteil der Stirnwand bzw. als Stirnwand in vorteilhafter Weise bereitgestellt werden kann. Im Zusammenhang mit dem vorstehend beschriebenen Herstellungsverfahren für die Kraftfahrzeugkarosserie sind derartige großflächige einstückige Bauteile als Bestandteil der Stirnwand bzw. als Stirnwand besonders vorteilhaft, da sie im Rahmen der vorstehend beschriebenen Reihenfolge des Verbindens der einzelnen Bestandteile der Vorderwagenstruktur miteinander trotz ihrer Großflächigkeit einfach verarbeitet werden können.

Bei dem Umformverfahren kann es sich insbesondere um eine direkte oder eine indirekte Warmumformung handeln. Bei der direkten Warmumformung erfolgt die Umformung, nachdem das Halbzeug auf eine erhöhte Temperatur, die insbesondere oberhalb der Rekristallisationstemperatur des jeweiligen Werkstoffs liegt, erhitzt worden ist. Bei der indirekten Warmumformung erfolgt vor dem Erhitzen des Halbzeugs zunächst eine Kaltumformung. Das Halbzeug wird nach der Kaltumformung erhitzt und warm umgeformt. Hierbei kann der Umformgrad der Warmumformung verglichen mit dem der Kaltumformung vergleichsweise gering sein. Beide Warmumformverfahren können vorsehen, dass eine Wärmebehandlung zur Erhöhung der Festigkeit im Rahmen der Warmumformung erfolgt. Hierunter ist insbesondere zu verstehen, dass die Wärmebehandlung erfolgt, während sich das bereits warm umgeformte Halbzeug noch in dem Werkzeug für die Warmumformung befindet.

Das Halbzeug kann insbesondere vor dem Durchführen der Umformung aus einer Mehrzahl im Bereich ihrer Ränder stoffschlüssig miteinander verbundener, insbesondere planer, Bleche hergestellt werden. Derartige Halbzeuge werden auch als sogenannte taylor-welded-blanks bezeichnet. Dabei kann insbesondere eine Stoßverschweißung der Ränder der einzelnen Bleche erfolgen. Es ist jedoch auch möglich, die Ränder in überlappender Weise miteinander zu verbinden. In diesem Fall können auch Punktschweißverfahren zum Einsatz kommen. Der Einsatz anderer Fügeverfahren ist ebenfalls möglich.

Alternativ und/oder ergänzend kann das Halbzeug vor und/oder während dem Durchführen der Umformung durch das stoffschlüssige Verbinden wenigstens eines auf ein insbesondere planes, Blech und/oder auf eine Mehrzahl im Bereich ihrer Ränder stoffschlüssig miteinander verbundener Bleche aufgebrachten, insbesondere planen, Verstärkungsbleches mit dem Blech und/oder mit den verbundenen Blechen hergestellt werden. Derartige Verstärkungsbleche werden auch als Patch-Verstärkungen bezeichnet. Diese können mittels Punktschweißverfahren, Laserschweißverfahren und/oder Buckelschweißverfahren mit dem Basisblech verbunden werden. Dabei erfolgt die Durchführung der Schweißverfahren vorzugsweise vor der Umformung. Alternativ und/oder ergänzend ist ein Warm-Clinchen, insbesondere während der Umformung, und/oder die Verwendung eines Lötverfahrens zum Verbinden der Verstärkungsbleche mit dem Basisblech möglich. Ein Lötverfahren kann beispielsweise unter Verwendung einer zwischen dem Verstärkungsblech und dem Blech und/oder den verbundenen Blechen eingebrachten Lötfolie erfolgen.

Mit anderen Worten ist es möglich, dass das Halbzeug dadurch gebildet wird, dass auf ein einstückiges Blech ein oder eine Mehrzahl Verstärkungsbleche als Patchverstärkungen aufgebracht wird. Ebenso ist es möglich, dass zunächst ein taylor-welded blank hergestellt wird, auf das dann weitere Verstärkungsbleche als Patchverstärkungen aufgebracht werden. Ein wesentlicher Vorteil bei der Herstellung des Halbzeugs auf die vorstehend beschriebene Art ist, dass diese im Wege der Bearbeitung planer Bleche erfolgen kann. Dies vereinfacht die Verfahrensführung bei der Herstellung des Halbzeugs für die Umformung erheblich. Insbesondere gilt dies für die bevorzugte Verbindung der Bleche untereinander und/oder der Bleche und der Verstärkungsbleche mittels Schweißverfahren.

Insbesondere kann das stoffschlüssige Verbinden der Bleche miteinander und/oder mit dem wenigstens einen Verstärkungsblech durch Laserstrahlschweißen erfolgen. Die bevorzugte Herstellung des Halbzeugs durch Laserstrahlschweißen kann insbesondere durch Laser-Remote-Schweißen erfolgen. Beim Laser-Remote-Schweißen oder Scannerschweißen erfolgt die Positionierung des Laserstrahls durch und/oder unter Zuhilfenahme von bewegbaren Ablenkspiegeln. Hierdurch lässt sich eine effiziente und hochautomatisierbare Herstellung der Halbzeuge für das Warmumformen erreichen. Insbesondere können mittels des Laser-Remoteschweißens auch großflächige Werkstücke zügig bearbeitet werden, da der Laser aus einer vergleichbar großen Distanz auf das Werkstück einwirken kann. Die flächige Form der Halbzeuge in Gestalt planer, d. h. insbesondere flacher und nicht umgeformter Bleche, wirkt sich hierbei positiv auf die Möglichkeit des Einsatzes der in Rede stehenden Laserscanner für die Durchführung des Schweißverfahren aus.

Bei den Blechen und/oder Verstärkungsblechen kann es sich insbesondere um Bleche mit unterschiedlichen Eigenschaften handeln. Auf diese Weise lassen sich Stirnwände herstellen, bei denen einzelne Bereiche der Stirnwand unterschiedliche Eigenschaften aufweisen können. Auf diese Weise kann die Stirnwand gezielt an die Anforderungen, insbesondere die mechanischen Anforderungen, die an ihre einzelnen Bereiche gestellt werden, angepasst werden. Insbesondere kann so auch das Verhalten einzelner Bereiche der Stirnwand im Falle einer Deformation, beispielsweise im Crashfall, gezielt beeinflusst werden.

Bei den unterschiedlichen Eigenschaften kann es sich insbesondere um unterschiedliche Festigkeiten und/oder Duktilitäten handeln. Unter unterschiedlichen Festigkeiten ist insbesondere die Zugfestigkeit des Werkstoffs, insbesondere des verwendeten Stahls, im fertigen Werkstück zu verstehen. Auf diese Weise lassen sich beispielsweise gezielt Zonen mit höherer oder niedrigerer Festigkeit und/oder Duktilität realisieren, was insbesondere im Hinblick auf die Anpassung der Stirnwand an gewünschte Eigenschaften im Crashfall vorteilhaft ist. Insbesondere kann die Duktilität in den einzelnen Bereichen der Stirnwand unterschiedlich eingestellt werden, um gezielt hohe Deformationsgrade und damit einen entsprechenden Energieabbau im Rahmen der Deformation in Bereichen mit höherer Duktilität und geringerer Festigkeit zu ermöglichen, während in anderen Bereichen durch deren höhere Festigkeit und niedrigere Duktilität der Deformationsgrad entsprechend begrenzt wird. Alternativ und/oder ergänzend können die verwendeten Bleche und/oder Verstärkungsbleche unterschiedliche Dicken aufweisen. Auch durch die Verwendung unterschiedlicher Dicken lässt sich die Festigkeit unterschiedlicher Bereiche der Stirnwand gezielt beeinflussen. Alternativ und/oder ergänzend kommt auch die Verwendung unterschiedlicher Stahlsorten in Betracht, um Eigenschaften unterschiedlicher Bereiche der Stirnwand gezielt zu beeinflussen.

Vor und/oder während der Umformung kann wenigstens ein Teilbereich aus dem Blech und/oder wenigstens einem der verbundenen Bleche ausgeschnitten werden. Hierdurch lassen sich insbesondere Öffnungen in der Stirnwand erzeugen. Auch kann ein Teilbereich aus einem Randbereich des Bleches bzw. der verbundenen Bleche ausgeschnitten werden. Auf diese Weise kann die im Zuge der Umformung entstehende Randkontur der Stirnwand gezielt beeinflusst werden, um einen gegebenenfalls notwendigen Beschnitt der Ränder nach der Umformung zu vereinfachen oder, insbesondere vollständig, zu ersetzen.

Das Ausschneiden des wenigstens einen Teilbereichs kann hierbei insbesondere mechanisch vor und/oder während der Umformung erfolgen. Insbesondere kann das Umformwerkzeug entsprechende Schneiden aufweisen, durch die das Ausschneiden während der Umformung erfolgt. Alternativ und/oder ergänzend kann das Ausschneiden mittels eines Lasers erfolgen. Auch hierbei kann insbesondere das Laser-Remote-Schneiden zum Einsatz kommen. Ähnlich wie vorstehend zum Laserschweißen beschrieben, wirkt sich die flächige Gestalt des Halbzeugs auch beim Laser-Remote-Schneiden, aber auch bei mechanischem Ausschneiden, besonders vorteilhaft im Hinblick auf die Bearbeitungszeit aus.

Insbesondere können in dem Halbzeug Öffnungen vorgesehen werden, die nach der Durchführung der Umformung in der Stirnwand Öffnungen bilden. Dies kann durch das vorstehend beschriebene Ausschneiden wenigstens eines Teilbereichs geschehen. Alternativ und/oder ergänzend ist es auch möglich, beispielsweise wenn es sich bei dem Halbzeug um ein taylor weded blank handelt, die Öffnungen durch das Auslassen wenigstens eines Teilbereichs bei dem Herstellen des Halbzeugs aus einer Mehrzahl Bleche vorzusehen. Dies hat den Vorteil, dass die entsprechenden Öffnungen erzeugt werden können, ohne dass Materialbereiche nachträglich ausgeschnitten werden, was den Bearbeitungsaufwand reduziert und darüber hinaus auch zu einer Materialersparnis führen kann.

Bei den so gebildeten Öffnungen in der Stirnwand kann es sich insbesondere um Öffnungen handeln, die der Durchführung der Strukturelemente dienen. Auf die Weise wird es kostengünstig ermöglicht, die Strukturelemente in vorteilhafter Weise an den hinter der Stirnwand angeordneten Karosseriebereich und die Längsträger anzubinden.

Insbesondere kann nach der Umformung ein Zurechtschneiden der Randbereiche des Bauteils auf eine gewünschte Kontur erfolgen. Hierdurch lassen sich sehr passgenaue Stirnwände herstellen. Das Zurechtschneiden der Randbereiche erfolgt in vorteilhafter Weise ebenfalls im Wege des Laserschneidens, insbesondere des Laser-Remote-Schneidens. Durch das vorstehend beschriebene Umformverfahren lassen sich insbesondere großflächige Stirnwände mit einer vergleichsweise flachen Struktur vorteilhaft herstellen. Derartig geformte Stirnwände eignen sich besonders gut für das Zurechtschneiden der Randbereiche mittels des Laserschneidens, insbesondere des Laser-Remote-Schneidens.

Alternativ und/oder ergänzend kann das Zurechtschneiden der Randbereiche des Halbzeugs vor und/oder während der Umformung erfolgen. In diesem Fall können insbesondere auch mechanische Schneideverfahren zum Einsatz kommen. Insbesondere kann das Zurechtschneiden mittels entsprechender Schneiden in dem Umformwerkzeug erfolgen. Das Zurechtschneiden des Randbereichs des Halbzeugs erfolgt in diesem Fall insbesondere derart, dass sich aufgrund der Umformung die gewünschte Kontur des Randbereichs des Bauteils ergibt. Auf diese Weise lässt sich die Nachbearbeitung der Randbereiche nach dem Umformverfahren dadurch reduzieren, dass der Randbereich des Halbzeugs bereits vor dem Durchführen des Umformverfahrens auf eine geeignete Kontur zurechtgeschnitten wird. Es hat sich gezeigt, dass die Kontur des umgeformten Bauteils auf diese Weise mit einer hinreichenden Genauigkeit vorgegeben werden kann, um Nacharbeiten der Kontur des Randbereichs nach der Umformung zu vermeiden oder zumindest erheblich zu reduzieren und so die Kosten signifikant zu senken. So kann beispielsweise die Breite der Stirnwand mit einer hinreichenden Genauigkeit, beispielsweise einer Toleranz von +/- 3 mm, vorgegeben und ein Beschnitt, der bei hohen Festigkeiten der Stirnwand bevorzugt mittels Laser erfolgt, im Idealfall vermieden werden.

Das Verfahren kann insbesondere vorsehen, dass Kraftfahrzeugkarosserien für eine Mehrzahl unterschiedlicher Kraftfahrzeugtypen hergestellt werden. Dabei werden für unterschiedliche Kraftfahrzeugtypen Bauteile hergestellt, die zumindest einen Teil der Stirnwand bilden, der sich über den Randbereich der Stirnwand erstreckt. Hierbei kann insbesondere ein Randbereich eines zur Herstellung des jeweiligen Bauteils verwendeten Halbzeugs auf eine Kontur zurechtgeschnitten werden. Diese Kontur wird derart gewählt, dass durch das Umformverfahren eine für den jeweils herzustellenden Kraftfahrzeugtyp spezifische Kontur des Randbereichs der Stirnwand entsteht.

Die Vorgehensweise ermöglicht es, eine Plattformstrategie zu realisieren, bei der die produzierten Stirnwände für die Kraftfahrzeugkarosserien unterschiedlicher Kraftfahrzeugtypen in einfacher Weise im laufenden Prozess angepasst werden können. Insbesondere muss hierfür lediglich die Kontur, auf die der Randbereich des verwendeten Halbzeugs zurechtgeschnitten wird, für die Verwendung des Bauteils im jeweiligen Kraftfahrzeugtyp angepasst werden. Beispielsweise können unterschiedliche Breiten des Halbzeugs verwendet werden, um unterschiedlich breite Stirnwände zu erzeugen. In diesem Zusammenhang ist eine Orientierung der Randbereiche der Stirnwand, die zumindest im Wesentlichen in Kraftfahrzeugquerrichtung verläuft, vorteilhaft, da durch die Vorgabe der Kontur des umgeformten Bauteils durch das Zurechtschneiden des Randbereichs des Halbzeugs unterschiedlich breite Stirnwände erzeugt werden können. Auf diese Weise lässt sich in eleganter Weise eine Plattformstrategie bei der Herstellung unterschiedlicher Kraftfahrzeugtypen im Hinblick auf die Herstellung der Stirnwand realisieren.

Alternativ und/oder kann nach der Durchführung des Umformverfahrens der Randbereich des jeweiligen Bauteils auf eine für den jeweils herzustellenden Kraftfahrzeugtyp spezifische Kontur der Stirnwand zurechtgeschnitten werden. Dies kann sowohl anhand der vorstehend beschriebenen, mittels des Umformverfahrens hergestellten Bauteile, die für die unterschiedlichen Fahrzeuge vor dem Zurechtschneiden des Randbereichs im Hinblick auf insbesondere ihre Kontur identisch sein können, als auch an Bauteilen, bei deren Herstellung die Kontur des verwendeten Halbzeugs bereits zurechtgeschnitten worden ist, erfolgen. Vorzugweise können für das Zurechtschneiden der Kontur Laserschneideverfahren, insbesondere das Laser-Remote-Schneiden zum Einsatz kommen. In diesem Zusammenhang ist insbesondere das Laser-Remote-Schneiden zum Zurechtschneiden des Randbereichs von Vorteil, da hier aufgrund der hohen Flexibilität bei der Strahlführung des Laserstrahls große Freiheitsgrade hinsichtlich einer Änderung des durchzuführenden Schneidvorganges von Bauteil zu Bauteil herrschen.

Die Durchführung des Umformverfahren kann insbesondere unter Verwendung eines identischen Werkzeugs für unterschiedliche Kraftfahrzeugtypen erfolgen. Während sich das Zurechtschneiden der Ränder, insbesondere mittels der vorstehend beschriebenen Laserschneideverfahren, in einfacher Weise an unterschiedliche Kraftfahrzeugtypen anpassen lässt, entstehen bei einem Umformwerkzeug, insbesondere einem Warmumformwerkzeug, erhebliche Investitionskosten. Auch ist der Wechsel eines Umformwerkzeugs und damit das Umrüsten einer entsprechenden Umformeinrichtung vergleichsweise aufwändiger als die Anpassung eines Schneidprozesses, insbesondere eines Laserschneideprozesses, bei dem im günstigsten Fall lediglich ein Steuerungseingriff notwendig ist, um die zu erzeugende Kontur anzupassen.

Alternativ und/oder ergänzend kann das Verfahren vorsehen, dass in Abhängigkeit von dem jeweils herzustellenden Kraftfahrzeugtyp ein für den jeweiligen Kraftfahrzeugtyp spezifischer Halbzeugtyp verwendet wird. Die Umformung der unterschiedlichen Halbzeugtypen erfolgt hierbei vorzugsweise in einem identischen Umformwerkzeug. Die Halbzeugtypen können sich insbesondere in der Dicke der Halbzeuge und/oder der Dicke einzelner Bereiche der Halbzeuge voneinander unterscheiden. So können insbesondere gewichtsoptimierte Stirnwände für die unterschiedlichen Kraftfahrzeugtypen wirtschaftlich sinnvoll hergestellt werden.

Weitere praktische Ausführungsformen der Erfindung sind nachfolgend im Zusammenhang mit den Zeichnungen beschrieben. Es zeigen:
- Fig. 1: eine schematische horizontale Schnittdarstellung des Verlaufs der Stirnwand,
- Fig. 2: eine schematische Darstellung des Verbindens der Strukturelemente mit der Stirnwand,
- Fig. 3: eine schematische Darstellung des Verbindens der Längsträger, der Strukturbauteile und des Windlauf-Querträgers mit der Stirnwand,
- Fig. 4: das Verbinden der vormontierten Vorderwagenstruktur mit dem hinter der Stirnwand angeordneten Karosseriebereich,
- Fig. 5: den Zustand nach dem Verbinden des hinter der Stirnwand angeordneten Karosseriebereichs mit der vormontierten Vorderwagenstruktur,
- Fig. 6: die beispielhafte Kraftfahrzeugkarosserie nach weiteren Montageschritten.

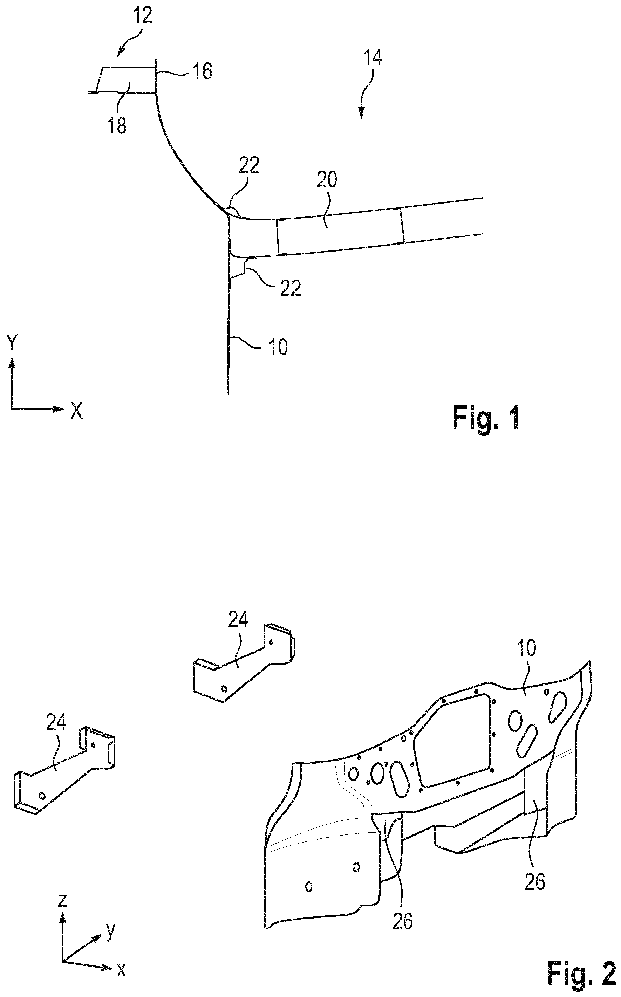

In Figur 1 ist beispielhaft dargestellt, wie die Stirnwand 10 eine Trennung zwischen dem hinter der Stirnwand 10 angeordneten Karosseriebereich 12 und der vormontierten Vorderwagenstruktur 14 bildet. In vorteilhafter Weise kann hierbei ein Randbereich 16 der Stirnwand 10 im Wesentlichen in Fahrzeugquerrichtung Y orientiert sein und sich in einer in Fahrzeuglängsrichtung X hinter der Stirnwand 10 angeordneten Seitenteilstruktur 18 der Karosserie abstützen. Die Seitenteilstruktur 18 kann wie im gezeigten Beispiel Bestandteil einer sich vom unteren Bereich der Kraftfahrzeugkarosserie, insbesondere dem Boden der Kraftfahrzeugkarosserie, zum Dach der Kraftfahrzeugkarosserie erstreckenden A-Säule sein.

Wie beispielhaft dargestellt kann die Stirnwand 10 aus einem Bauteil gebildet werden, dass durch ein Umformverfahren aus einem flächigen Halbzeug hergestellt wird. In diesem Fall ist es vorteilhaft, wenn sich das umgeformte Bauteil wie beispielhaft dargestellt zumindest einen sich auf beiden Seiten des Kraftfahrzeugs über Bereiche der Radhäuser und/oder Randbereiche 16 der Stirnwand 10 erstreckt.

Die Längsträger 20 können wie im gezeigten Beispiel mittels Verbindungselementen 22 mit der Stirnwand 10 verbunden sein.

Wie beispielhaft in der Figur 2 gezeigt, können im Rahmen des Verfahrens zum Zusammenbau einer Kraftfahrzeugkarosserie zunächst Strukturelemente 24 durch Öffnungen 26 in der Stirnwand 10 geführt werden. Die Strukturelemente 24 können alternativ oder ergänzend hierzu mit der Stirnwand 10 verbunden werden und so einen Verbund aus Stirnwand 10 und Strukturelementen 24 bilden.

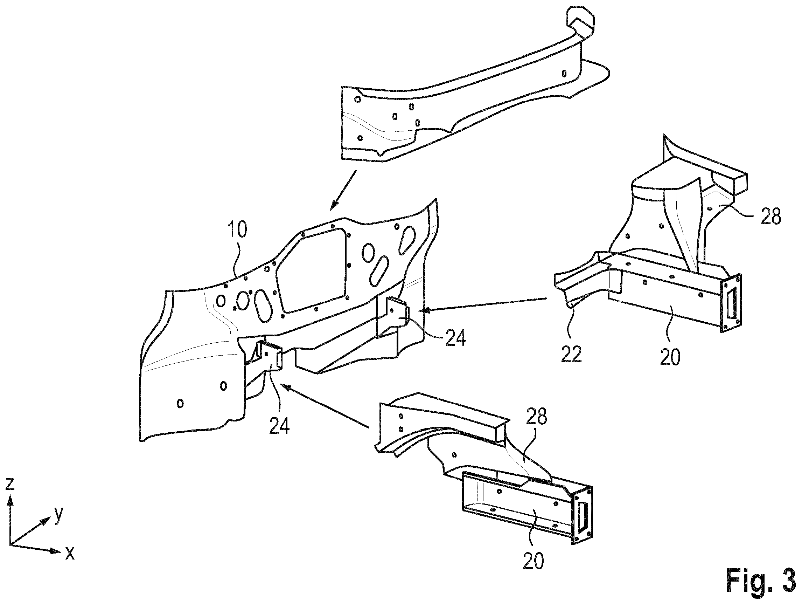

In Figur 3 ist dargestellt, wie der gebildete Verbund aus Stirnwand 10 und Strukturelementen 24 mit weiteren Bestandteilen des Vorderwagens verbunden werden kann. Die Stirnwand 10 wird so im gezeigten Beispiel zum Bestandteil der vormontierten Vorderwagenstruktur 14. Die Trennung zwischen der vormontierten Vorderwagenstruktur 14 und dem Karosseriebereich 12 verläuft im gezeigten Beispiel unmittelbar hinter der Stirnwand 10.

Wie im gezeigten Beispiel dargestellt können zunächst die Längsträger 20 mit den Verbindungselementen 22 zum Verbinden der Längsträger 20 mit der Stirnwand 10 verbunden werden. Ebenfalls können weitere Strukturbauteile 28, die wie im gezeigten Beispiel einen Federbeindom und einen Teil eines Radhauses umfassen können, mit den jeweiligen Längsträgern 20 verbunden werden. Die so gebildeten Einheiten können dann mit dem aus der Stirnwand 10 und den Strukturelementen 24 gebildeten Verbund verbunden werden. Ein Windlauf-Querträger 30 kann wie im gezeigten Beispiel ebenfalls mit dem Verbund aus der Stirnwand 10 und den Strukturelementen 24 verbunden werden.

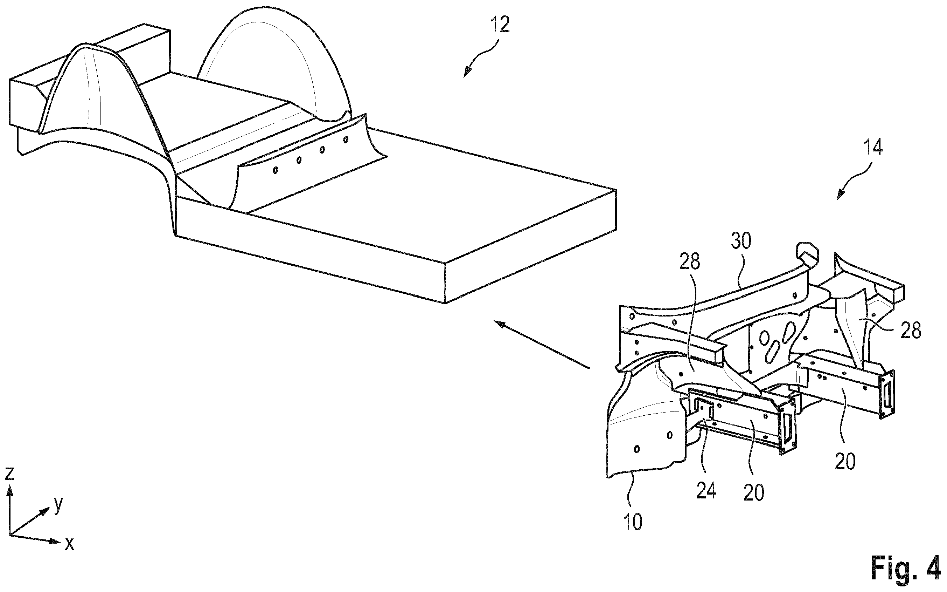

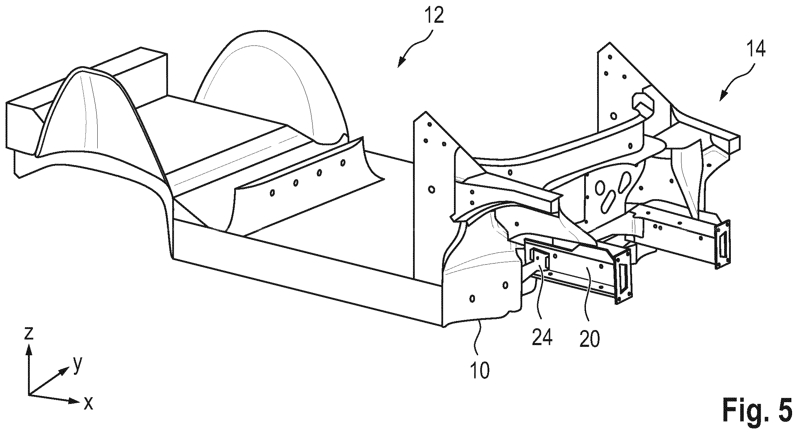

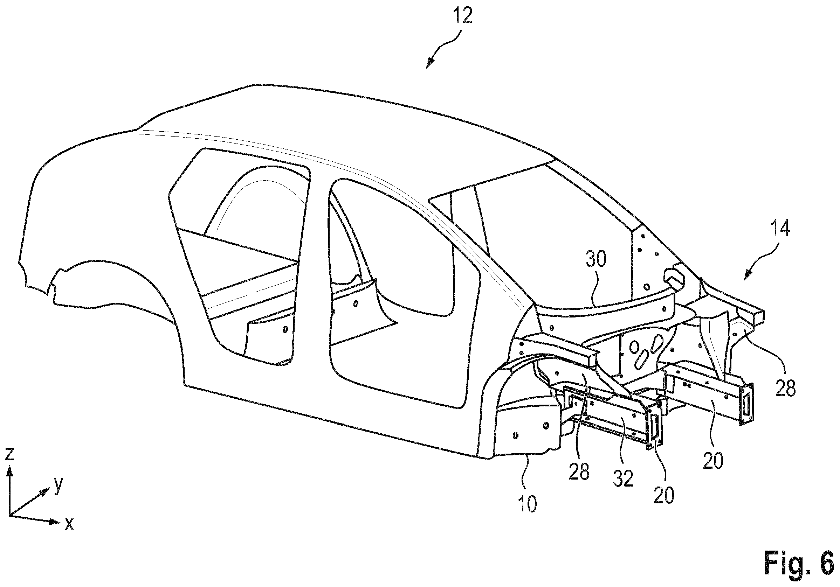

Wie insbesondere anhand der Figuren 4 und 5 zu erkennen ist, kann das Verbinden der Strukturelemente 24 mit den Längsträgern 20 derart erfolgen, dass die Strukturelemente 24 mit der Innenseite der als Hohlstruktur ausgeführten Längsträger 20 verbunden werden. Dies kann dadurch ermöglicht werden, dass ein Teil 32 des jeweiligen Längsträgers 20 erst nach dem Verbinden des entsprechenden Strukturelementes mit der Innenseite des Längsträgers 20 an den Längsträger 20 angefügt wird. Im gezeigten Beispiel ist dies zwischen den in Figur 5 und in Figur 6 dargestellten Zeitpunkten des Zusammenbaus der Kraftfahrzeugkarosserie der Fall.

Wie aus den Figuren 4 bis 6 hervorgeht, kann der Karosseriebereich 12, der hinter der Stirnwand 10 angeordnet ist, sowohl - zumindest teilweise - vormontiert werden, bevor dieser mit der Vorderwagenstruktur 14 verbunden wird, als auch kann wie in den Figuren 5 und 6 dargestellt, nach dem Verbinden der Vorderwagenstruktur 14 mit dem hinter der Stirnwand 10 angeordneten Karosseriebereich 12 ein weiterer Zusammenbau des Karosseriebereichs 12 erfolgen.

### Bezugszeichenliste

- 10: Stirnwand
- 12: Karosseriebereich
- 14: Vorderwagenstruktur
- 16: Randbereich
- 18: Seitenteilstruktur
- 20: Längsträger
- 22: Verbindungselemente
- 24: Strukturelemente
- 26: Öffnungen
- 28: Strukturbauteil
- 30: Windlaufquerträger
- 32: Teil der Längsträger

- X: Fahrzeuglängsrichtung
- Y: Fahrzeugquerrichtung
- Z: Fahrzeughochrichtung

## Patentansprüche

1. Verfahren zum Zusammenbau einer Kraftfahrzeugkarosserie, wobei die Kraftfahrzeugkarosserie eine Vorderwagenstruktur (14) mit einer Stirnwand (10) und einen in Kraftfahrzeuglängsrichtung (X) hinter der Stirnwand (10) angeordneten Karosseriebereich (12) aufweist, wobei die Vorderwagenstruktur (14) zunächst getrennt von dem Karosseriebereich (12) vormontiert wird, bevor die Vorderwagenstruktur (14) mit dem hinter der Stirnwand (10) angeordneten Karosseriebereich (12) verbunden wird, wobei die Trennung zwischen der vormontierten Vorderwagenstruktur (14) und dem Karosseriebereich unmittelbar vor oder hinter der Stirnwand (10) verläuft, wobei bei der Vormontage der Vorderwagenstruktur (14) Längsträger (20) der Vorderwagenstruktur (14) mit der Stirnwand (10) verbunden werden, wobei bei der Vormontage Strukturelemente (24) zum Verbinden der Längsträger (20) mit dem hinter der Stirnwand (10) angeordneten Karosseriebereich (12) mit den Längsträgern (20) verbunden werden,
**dadurch gekennzeichnet,**
**dass** die Strukturelemente (24) durch Öffnungen (26) in der Stirnwand (10) geführt werden.

2. Verfahren nach Anspruch 1, **dadurch gekennzeichnet, dass** die Verbindung der Längsträger (20) mit der Stirnwand (10) mittels Verbindungselementen (22) erfolgt, die sowohl mit der Stirnwand (10), als auch mit den Längsträgern (20) verbunden werden.

3. Verfahren nach Anspruch 2, **dadurch gekennzeichnet, dass** die Verbindungselemente (22) und die mit den Verbindungselementen (22) verbundenen Bereiche der Stirnwand (10) aus Stahl hergestellt werden und die Längsträger (20) zunächst mit den Verbindungselementen (22) verbunden werden, bevor diese mit der Stirnwand (10) verbunden werden.

4. Verfahren nach einem der vorigen Ansprüche, **dadurch gekennzeichnet, dass** die Längsträger (20) als Hohlstruktur ausgeführt sind, wobei die Strukturelemente (24) mit der Innenseite der Hohlstruktur verbunden werden und ein Teil (32) des jeweiligen Längsträgers (20) erst nach dem Verbinden des entsprechenden Strukturelements (24) mit der Innenseite des Längsträgers (20) an den Längsträger (20) angefügt wird.

5. Verfahren nach einem der vorigen Ansprüche, **dadurch gekennzeichnet, dass** die Strukturelemente (24) zunächst mit der Stirnwand (10) verbunden werden, insbesondere wobei die Strukturelemente (24) durch Öffnungen (26) in der Stirnwand (10) geführt werden, bevor die Verbindung der Längsträger (20) mit der Stirnwand (10) und/oder der Strukturelemente (24) mit den Längsträgern (20) erfolgt.

6. Verfahren nach einem der vorigen Ansprüche, **dadurch gekennzeichnet, dass** zunächst Strukturbauteile (28), welche zumindest einen Teil eines oberen Längsträgers (20), eines Federbeindoms und/oder eines Radhauses umfassen, mit den Längsträgern (20) verbunden werden, bevor die Längsträger (20) mit den Strukturelementen (24) und/oder der Stirnwand (10) verbunden werden.

7. Verfahren nach einem der vorigen Ansprüche, **dadurch gekennzeichnet, dass** vor dem Verbinden der Vorderwagenstruktur (14) mit dem hinter der Stirnwand (10) angeordneten Karosseriebereich (12) ein Windlaufquerträger (30) mit der Stirnwand (10) und/oder den Strukturbauteilen (24) verbunden wird.

8. Verfahren nach einem der vorigen Ansprüche, **dadurch gekennzeichnet, dass** ein Bauteil, welches zumindest den Teil der Stirnwand (10) bildet, der mit den Längsträgern (20) verbunden wird, mittels eines Umformverfahrens aus einem flächigen Halbzeug hergestellt wird.

## Claims

1. Method for assembling a motor vehicle body, the motor vehicle body comprising a front-end structure (14) which has a bulkhead (10) and a body region (12) arranged behind the bulkhead (10) in the longitudinal direction (X) of the motor vehicle, the front-end structure (14) first being pre-assembled separately from the body region (12), before the front-end structure (14) is connected to the body region (12) arranged behind the bulkhead (10), the partition between the pre-assembled front-end structure (14) and the body region running directly in front of or behind the bulkhead (10), side rails (20) of the front-end structure (14) being connected to the bulkhead (10) during the pre-assembly of the front-end structure (14), structural elements (24) for connecting the side rails (20) to the body region (12) arranged behind the bulkhead (10) being connected to the side rails (20) during the pre-assembly,
**characterized in that**
the structural elements (24) extend through openings (26) in the bulkhead (10).

2. Method according to claim 1, **characterized in that** the side rails (20) are connected to the bulkhead (10) by means of connecting elements (22), which are connected both to the bulkhead (10) and to the side rails (20).

3. Method according to claim 2, **characterized in that** the connecting elements (22) and the regions of the bulkhead (10) connected to the connecting elements (22) are made of steel and the side rails (20) are first connected to the connecting elements (22) before they are connected to the bulkhead (10).

4. Method according to any of the preceding claims, **characterized in that** the side rails (20) are a hollow structure, the structural elements (24) being connected to the inside of the hollow structure and a part (32) of the relevant side rail (20) being attached to the side rail (20) only after the corresponding structural element (24) has been connected to the inside of the side rail (20).

5. Method according to any of the preceding claims, **characterized in that** the structural elements (24) are first connected to the bulkhead (10), in particular the structural elements (24) extending through openings (26) in the bulkhead (10), before the side rails (20) are connected to the bulkhead (10) and/or the structural elements (24) are connected to the side rails (20).

6. Method according to any of the preceding claims, **characterized in that** structural components (28), which comprise at least part of an upper side rail (20), a strut tower and/or a wheel house, are first connected to the side rails (20) before the side rails (20) are connected to the structural elements (24) and/or the bulkhead (10).

7. Method according to any of the preceding claims, **characterized in that,** before connecting the front-end structure (14) to the body region (12) arranged behind the bulkhead (10), a cowl cross member (30) is connected to the bulkhead (10) and/or the structural components (24).

8. Method according to any of the preceding claims, **characterized in that** a component which forms at least the part of the bulkhead (10) that is connected to the side rails (20) is produced from a flat semi-finished product by means of a deformation process.

## Revendications

1. Procédé d'assemblage d'une carrosserie de véhicule automobile, dans lequel la carrosserie de véhicule automobile présente une structure de partie avant (14) comportant une paroi frontale (10) et une zone de carrosserie (12) agencée derrière la paroi frontale (10) dans le sens longitudinal (X) de véhicule automobile, dans lequel la structure de partie avant (14) est d'abord prémontée séparément de la zone de carrosserie (12) avant que la structure de partie avant (14) ne soit reliée à la zone de carrosserie (12) agencée derrière la paroi frontale (10), dans lequel la séparation entre la structure de partie avant du véhicule (14) prémontée et la zone de carrosserie s'étend directement devant ou derrière la paroi frontale (10), dans lequel des longerons (20) de la structure de partie avant (14) sont reliés à la paroi frontale (10) lors du prémontage de la structure de partie avant (14), dans lequel des éléments structurels (24) destinés à relier les longerons (20) à la zone de la carrosserie (12) agencée derrière la paroi frontale (10) sont reliés aux longerons (20) lors du prémontage,
**caractérisé en ce**
**que** les éléments structurels (24) sont guidés à travers des ouvertures (26) dans la paroi frontale (10).

2. Procédé selon la revendication 1, **caractérisé en ce que** la liaison des longerons (20) avec la paroi frontale (10) s'effectue au moyen d'éléments de liaison (22) qui sont reliés à la fois à la paroi frontale (10) et aux longerons (20).

3. Procédé selon la revendication 2, **caractérisé en ce que** les éléments de liaison (22) et les zones de la paroi frontale (10) reliées aux éléments de liaison (22) sont fabriqués en acier et les longerons (20) sont d'abord reliés aux éléments de liaison (22) avant que ceux-ci ne soient reliés à la paroi frontale (10).

4. Procédé selon l'une des revendications précédentes, **caractérisé en ce que** les longerons (20) sont réalisés sous la forme d'une structure creuse, dans lequel les éléments structurels (24) sont reliés à la face intérieure de la structure creuse et une partie (32) du longeron respectif (20) n'est ajoutée au longeron (20) qu'après la liaison de l'élément structurel (24) correspondant avec la face intérieure du longeron (20).

5. Procédé selon l'une des revendications précédentes,
**caractérisé en ce que** les éléments structurels (24) sont d'abord reliés à la paroi frontale (10), en particulier dans lequel les éléments structurels (24) sont guidés à travers des ouvertures (26) dans la paroi frontale (10) avant que la liaison des longerons (20) avec la paroi frontale (10) et/ou des éléments structurels (24) avec les longerons (20) soit effectuée.

6. Procédé selon l'une des revendications précédentes, **caractérisé en ce que** des composants structurels (28), qui comprennent au moins une partie d'un longeron supérieur (20), d'un dôme de jambe de force et/ou d'un passage de roue, sont d'abord assemblés aux longerons (20) avant que les longerons (20) ne soient assemblés aux éléments structurels (24) et/ou à la paroi frontale (10).

7. Procédé selon l'une des revendications précédentes,
**caractérisé en ce qu'**avant de relier la structure de partie avant (14) à la zone de carrosserie (12) agencée derrière la paroi frontale (10), une traverse d'auvent (30) est reliée à la paroi frontale (10) et/ou aux composants structurels (24).

8. Procédé selon l'une des revendications précédentes,
**caractérisé en ce qu'un** composant, qui forme au moins la partie de la paroi frontale (10) qui est reliée aux longerons (20), est fabriqué à partir d'un produit semi-fini plat au moyen d'un procédé de formage.
